# EUROPEAN PATENT APPLICATION

(11) **EP 4 458 165 A1**
(43) Date of publication of application: **06.11.2024**
(21) Application number: 22916743.2
(22) Date of filing: 28.12.2022
(51) Int. Cl.: A23L 21/10, A23L 2/38, A23L 29/256, A23L 29/244, A23L 29/238, A23L 2/56

(54) **METHOD FOR MANUFACTURING WATER JELLY USING FERMENTED VINEGAR**

(30) Priority: 29.12.2021 KR 20210191541
(71) Applicant: CJ CheilJedang Corporation, Seoul 04560 (KR)
(72) Inventor: JEONG, Ji Hyeon, Seoul 04560 (KR); SEONG, Hae Jin, Seoul 04560 (KR); LEE, Suk Young, Seoul 04560 (KR); PARK, Hong Wook, Seoul 04560 (KR); KANG, Ki Moon, Seoul 04560 (KR)
(74) Representative: Cabinet Laurent & Charras
(86) International application number: PCT/KR2022/021495
(87) International publication number: WO 2023/128602

(57) **Abstract**

The present invention relates to a method for manufacturing a water jelly and a water jelly manufactured by the manufacturing method, the method comprising the steps of: preparing a gelled product by mixing a gelling agent, saccharides, and purified water; adding a first acidity regulator to the gelled product; preparing a fermented vinegar mixture by adding fermented vinegar to the gelled product to which the first acidity regulator is added; and preparing a jelly preparation solution by adding a second acidity regulator to the fermented vinegar mixture.

## Description

### TECHNICAL FIELD

The present application relates to a method for manufacturing a water jelly and a water jelly manufactured thereby.

### BACKGROUND ART

In general, jelly is manufactured by blending a polysaccharide thickener hydrated in water, or acidulants, concentrates, flavoring, and the like including saccharides in polymer proteins, and its type includes gummy jelly, water jelly, and the like. Gummy jelly is a formulation made by hardening a jelly mixture in a liquid state and is characterized by having high elasticity, while water jelly contains a relatively large amount of water added even when it is manufactured by adding the same polysaccharide thickener as that of gummy jelly, and has a soft physical property and may be an intermediate form between a liquid drink and a gummy jelly. The water jelly has a characteristic of a jelly structure collapsing easily due to external physical shock, and when an amount of a polysaccharide thickener is increased in order to increase gel strength or is relatively decreased, ingestion may be impossible depending on a packaging method, and thus, the water jelly may be a formulation of which the amount of the polysaccharide thickener is very important.

Meanwhile, vinegar is manufactured by fermenting microorganisms using cereals, fruits, alcoholic beverages, and the like abundant in saccharides and starch as a main raw material, and is classified into fermented vinegar (brewed vinegar) and synthetic vinegar depending on the manufacturing method. Fermented vinegar is manufactured by mixing a fermentation liquid obtained by acetic fermenting fruit, grain suldeot, fruit wine, fruit juice, grain liquor, grain saccharification liquid, spirit, saccharides, or the like as a raw material and a fruit juice or grain saccharification liquid and aging the mixture, and synthetic vinegar is manufactured by diluting glacial acetic acid or acetic acid with water. Since quality of the fermented vinegar varies depending on raw materials and fermentation methods used in fermentation, the acidity may not be accurately adjusted like that of synthetic vinegar, and thus, a specification range of a total acid content is broader than that of the synthetic vinegar. In addition, since the fermented vinegar lowers a blood cholesterol level and removes lipid peroxides, it has an effect of improving symptoms such as high blood pressure, arteriosclerosis, and hyperlipidemia as well as an anti-obesity action, and thus, attempts to directly take it or take it by adding it to various foods are being actively made.

However, since the fermented vinegar has a large deviation of a total acid content (acidity) range, it is difficult to use it as a raw material of a gelled food which has physical properties changed depending on the total acid content. In particular, in the case of water jelly, when the fermented vinegar having an inconsistent total acid content specification is added, the total acid content is changed, heating is continuously performed, and a gel structure may be disentangled, and thus, a manufacturing time is extended and it is difficult to manufacture a water jelly having constant quality. Therefore, there is a need to develop a method for efficiently manufacturing a water jelly having constant quality using a fermented vinegar.

### [PRIOR ART DOCUMENTS]

### [Patent Document]

Korean Patent Laid-Open Publication No. 10-2018-0121807 (November 9, 2018)

### DISCLOSURE OF THE INVENTION

### TECHNICAL PROBLEM

An objective of the present application is to provide a method for manufacturing a water jelly having constant quality without disentanglement of a gel structure even in the case of adding fermented vinegar, and a water jelly manufactured by the manufacturing method.

### TECHNICAL SOLUTION

To solve the above-described limitation, the present application provides a method for manufacturing a water jelly including: mixing a gelling agent, a saccharide, and purified water to prepare a gelled product; adding a first acidity regulator to the gelled product; adding fermented vinegar to the gelled product to which the first acidity regulator has been added to prepare a fermented vinegar mixed solution; and adding a second acidity regulator to the fermented vinegar mixed solution to prepare a jelly preparation solution.

The present application also provides a water jelly manufactured by the above manufacturing method.

Hereinafter, the present application will be described in detail.

An aspect of the present application provides a method for manufacturing a water jelly.

The method of the present application includes mixing a gelling agent, a saccharide, and purified water to prepare a gelled product.

The gelling agent refers to a material having ability to form gel, and is widely used in manufacture of food and the like for fixing flowability, taking shape, or improving texture. The gelling agent may be any one or more selected from the group consisting of agar, carrageenan, Konjac, gellan gum, locust bean gum, guar gum, xanthan gum, tara gum, gelatin, carboxymethyl cellulose, alginic acid, pectin, and specifically, may be a mixture of carrageenan, Konjac, and locust bean gum, but is not limited thereto.

In a specific example of the present application, it was confirmed that when a mixed gelling agent of carrageenan, Konjac, and locust bean gum was used as the gelling agent, a gel which was elastic and not hard so that it was easy to swallow was formed.

The carrageenan, Konjac, and locust bean gum may be a mixture at a weight ratio of 0.09-0.15 : 0.09-0.15 : 0.02-0.05. When the gelling agent is mixed in the above range and used, a gel which has good gel-forming ability and is good to swallow so that it is appropriate for a water jelly may be formed.

The type of saccharides is not limited as long as it is used in foods, and for example, may be sugar, fructose, maltose, glucose, starch syrup, oligosaccharide, honey, trehalose, sorbitol, xylitol, mannitol, rhamnitol, inositol, erythritol, quercitol, and the like.

The gelling agent and the saccharide may be used by mixing each dissolved product in which each saccharide for each type of gelling agent is added and dissolved with purified water. For example, when carrageenan, Konjac, and locust bean gum are used as the gelling agent, each of dissolved products of gelling agents and saccharides obtained by mixing carrageenan and a saccharide, mixing Konjac and a saccharide, and mixing Locust bean gum and a saccharide and performing dissolution may be mixed with purified water. Thus, the gelling agents are prevented from being aggregated and forming lumps, and the solubility may be increased within a short time after adding the dissolved product to purified water.

The purified water may be purified water heated to a temperature of 60°C to 90°C, 70°C to 85°C, 75°C to 85°C, or 80°C to 85°C. When the purified water is heated to the temperature range, rapid gelation is prevented, so that the gelling agent and a saccharide may be uniformly mixed with purified water and completely dissolved and a dissolution time of the gelling agent may be shortened.

When the gelled product is prepared by mixing the dissolved product of the gelling agent and the saccharide with the purified water, 3 to 10 wt% of the saccharide may be further added for adjusting a sweet taste.

The method for manufacturing a water jelly of the present application includes adding a first acidity regulator to the gelled product.

The first acidity regulator is used for increasing a total acid content (acidity) of the gelled product. The first acidity regulator may be an organic acid salt, a phosphate, and the like, and for example, may be any one or more selected from the group consisting of potassium citrate, calcium citrate, tripotassium citrate, trisodium citrate, disodium citrate, sodium lactate, potassium lactate, calcium lactate, magnesium lactate, zinc lactate, potassium tartrate, calcium tartrate, DL-sodium tartrate, sodium potassium tartrate, DL-sodium malate, L-sodium aspartate, L-magnesium aspartate, calcium ascorbate, L-sodium ascorbate, sodium succinate, disodium succinate, sodium phosphate, and potassium phosphate.

When the first acidity regulator is added before adding the fermented vinegar, the total acid content of the gelled product is increased, and thus, the gel structure may be maintained without being broken when the fermented vinegar and the like is added.

An amount of the first acidity regulator added may be 0.05 to 0.5 wt%, 0.05 to 0.3 wt%, 0.05 to 0.2 wt%, 0.1 to 0.3 wt%, 0.1 to 0.2 wt%, or 0.1 to 0.15 wt%, with respect to the total weight of the water jelly.

The method for manufacturing a water jelly of the present application may further include adding any one or more selected from the group consisting of sweeteners and concentrates, before adding the first acidity regulator to the gelled product.

The sweetener is used for imparting sweetness to the water jelly, and for example, may be formed of one or more selected from the group consisting of maltodextrin, stevia, sucralose, trehalose, sorbitol, xylitol, mannitol, rhamnitol, inositol, erythritol, and quercitol. An amount of the sweetener added may be 0.05 to 20 wt% with respect to the total weight of the water jelly.

The concentrate is used for imparting various tastes to the water jelly, and fruit concentrates such as apple, lemon, pomegranate, pineapple, calamansi, orange, tangerine, mango, grapefruit, and peach may be used. The concentrate may be added at 0.1 to 10 wt%, 0.1 to 7 wt%, 1 to 5 wt%, or 2 to 3 wt% with respect to the total weight of the water jelly. When the concentrate is added in the range, the taste of the water jelly becomes richer and the gel structure may not collapse.

The method for manufacturing a water jelly of the present application may further include adding a flavoring, after adding the first acidity regulator to the gelled product.

The flavoring is used for enhancing flavor of the water jelly. The flavoring may be natural flavoring, synthetic flavoring, and the like, and for example, may be fruit flavor such as apple, lemon, pomegranate, pineapple, calamansi, orange, tangerine, mango, grapefruit, and peach.

The flavoring may be added at 0.05 to 0.5 wt%, 0.1 to 0.4 wt%, or 0.25 to 0.35 wt% with respect to the total weight of the water jelly.

The method for manufacturing a water jelly of the present application includes adding fermented vinegar to the gelled product to which the first acidity regulator has been added to prepare a fermented vinegar mixed solution.

The fermented vinegar is used for imparting functionality to the water jelly, and the fermented vinegar includes higher contents of various organic acids such as malic acid, 1-hexanol, lysine, and lactic acid, alcohol, amino acid, and the like, as compared with regular vinegar.

The total acid content of the fermented vinegar may be 7 w/v% to 9 w/v%, specifically a total acid content range including any one lower limit selected from the group consisting of 7 w/v%, 7.1 w/v%, 7.2 w/v%, 7.3 w/v%, and 7.4 w/v%; and any one upper limit selected from the group consisting of 9 w/v%, 8.9 w/v%, 8.8 w/v%, 8.7 w/v%, 8.6 w/v%, 8.5 w/v%, 8.4 w/v%, 8.3 w/v%, 8.2 w/v%, 8.1 w/v%, 8 w/v%, 7.8 w/v%, 7.6 w/v%, and 7.5 w/v%, and more specifically, may be 7 w/v% to 9 w/v%, 7.1 w/v% to 8.9 w/v%, 7.2 w/v% to 8.8 w/v%, 7.3 w/v% to 8.7 w/v%, 7.4 w/v% to 8.7 w/v%, or 7.5 w/v% to 8.7 w/v%.

A pH range of the fermented vinegar may be pH 2 to pH 4, specifically, a pH range including any one lower limit selected from the group consisting of pH 2, pH 2.1, pH 2.2, pH 2.3, pH 2.4, and pH 2.5; and any one upper limit selected from the group consisting of pH 4, pH 3.9, pH 3.8, pH 3.7, pH 3.6, pH 3.5, pH 3.4, pH 3.3, pH 3.2, pH 3.1, pH 3, pH 2.9, and pH 2.8, and more specifically, may be pH 2 to pH 4, pH 2.1 to pH 3.9, pH 2.2 to pH 3.8, pH 2.3 to pH 3.7, pH 2.4 to pH 3.6, pH 2.4 to pH 3.5, pH 2.4 to pH 3.4, pH 2.4 to pH 3.3, or pH 2.4 to pH 3.2.

In the present application, the term "total acid" used in describing the first acidity regulator, the fermented vinegar, the second acidity regulator, the jelly preparation solution, and the like is used to refer to all of the acid components included in the material, the total acid content may be used interchangeably with the same meaning as the "total acid content" or "acidity", and the unit of the total acid content is expressed as "w/v%".

The fermented vinegar usually refers to brewing vinegar manufactured by mixing a fermentation liquid obtained by acetic fermenting fruit, grain suldeot, fruit wine, fruit juice, grain liquor, grain saccharification liquid, spirit, saccharides, or the like and a fruit juice or grain saccharification liquid and aging the mixture, and is characterized in that it is difficult to standardize the total acid content unlike synthetic vinegar. The fermented vinegar may be a fruit fermented vinegar obtained by fermenting fruits such as apple, lemon, pomegranate, pineapple, calamansi, orange, tangerine, mango, grapefruit, and peach.

An amount of the fermented vinegar added may be 1 to 10 wt% with respect to the total weight of the water jelly. Specifically, the lower limit of the amount of the fermented vinegar added may be 1 wt%, 1.5 wt%, 2 wt%, 2.5 wt%, 3 wt%, 3.5 wt%, or 4 wt%, and the upper limit of the amount of the fermented vinegar added may be 10 wt%, 9 wt%, 8.5 wt%, 8 wt%, 7.5 wt%, 7 wt%, 6.5 wt%, 6 wt%, 5.5 wt%, or 5 wt%. In addition, the amount of the fermented vinegar added may be in a range of a combination of one selected from the lower limits and one selected from the upper limit of the content described above, and may be, for example, 1 to 10 wt%, 2 to 8 wt%, 3 to 6 wt%, 4 to 7 wt%, or 4 to 5.5 wt%. By adding the fermented vinegar in the above content, the gel structure is prevented from collapsing during a manufacturing process and functionality may be sufficiently imparted to the water jelly.

The method for manufacturing a water jelly of the present application includes adding a second acidity regulator to the fermented vinegar mixed solution to prepare a jelly preparation solution.

The second acidity regulator not only imparts a refreshing taste to the water jelly, but also is used for adjusting the total acid content (acidity) of the fermented vinegar mixed solution. The second acidity regulator may be any one or more selected from the group consisting of citric acid, malic acid, tartaric acid, lactic acid, succinic acid, lemon juice, and vitamin C.

In the adding of a second acidity regulator to the fermented vinegar mixed solution, an amount of the second acidity regulator added may be adjusted so that the total acid content (acidity) of the jelly preparation solution is 0.4 w/v% to 0.7 w/v%.

When the acidity of the jelly preparation solution is 0.4 w/v% to 0.7 w/v%, a jelly which is elastic and is easy to swallow may be formed.

In an exemplary embodiment, the total acid content (acidity) of the jelly preparation solution may be adjusted by the following method:

First, the amount of the second acidity regulator added to make the total acid content of the jelly preparation solution 0.4 w/v% to 0.7 w/v% when using a reference fermented vinegar is first calculated, and then
when the fermented vinegar used has an increased total acid content as compared with the total acid content of the reference fermented vinegar, the second acidity regulator may be added in a decreased amount as compared with the amount of the second acidity regulator added which is calculated when using the reference fermented vinegar, or
when the fermented vinegar used has a decreased total acid content as compared with the total acid content of the reference fermented vinegar, the second acidity regulator may be added in an increased amount as compared with the amount of the second acidity regulator added which is calculated when using the reference fermented vinegar.

The reference fermented vinegar may be a fermented vinegar having a specific total acid content, and for example, may be a fermented vinegar having a total acid content of 7.0 w/v%.

The amount of the second acidity regulator which is decreased or increased as compared with the amount of the second acidity regulator added which is calculated when using the reference fermented vinegar may be obtained by calculation.

Specifically, the amount of the second acidity regulator added to make the total acid content of the jelly preparation solution 0.4 to 0.7 w/v% when using the reference fermented vinegar having the total acid content of 7.0 w/v% is first calculated, and then when the used fermented vinegar has the total acid content increased by 14.3% to 21.4% as compared with the total acid content of the reference fermented vinegar, the second acidity regulator may be added in an amount decreased by 45% to 55% as compared with the amount of the second acidity regulator added which is calculated when using the reference fermented vinegar. More specifically, when the used fermented vinegar has the total acid content increased by 15.7% to 20% or has the total acid content increased by 17.1% to 18.6% as compared with the total acid content of the reference fermented vinegar, the second acidity regulator in an amount decreased by 45% to 55% as compared with the amount of the second acidity regulator added which is calculated when using the reference fermented vinegar may be added.

In addition, the amount of the second acidity regulator added to make the total acid content of the jelly preparation solution 0.4 to 0.7 w/v% when using the reference fermented vinegar having the total acid content of 7.0 w/v% is first calculated, and then when the used fermented vinegar has the total acid content increased by 22% to 28.5% as compared with the total acid content of the reference fermented vinegar, the second acidity regulator may be added in an amount decreased by 5% to 15% as compared with the amount of the second acidity regulator added which is calculated when using the reference fermented vinegar. More specifically, when the used fermented vinegar has the total acid content increased by 22.8% to 27.2% or has the total acid content increased by 24.2% to 25.7% as compared with the total acid content of the reference fermented vinegar, the second acidity regulator in an amount decreased by 5% to 15% as compared with the amount of the second acidity regulator added which is calculated when using the reference fermented vinegar may be added.

In a specific example of the present application, a preferred amount of citric acid as the second acidity regulator added to make the total acid content of the jelly preparation solution 0.4 w/v% to 0.7 w/v% when the total acid content of the fermented vinegar is 7.0 w/v% was calculated as 0.03 wt% with respect to the jelly preparation solution (water jelly). Thereafter, the water jelly was manufactured using the fermented vinegar having the total acid content of 8.4 w/v%, and as a result of adding the citric acid in an amount decreased by 0.015 wt% which corresponds to 50% of 0.03 wt%, it was confirmed that a gel was formed and the formed gel was maintained without collapsing until 120 minutes have passed immediately after manufacture of the water jelly (see Tables 5 and 7 of Example 2).

By adding the second acidity regulator in the last step of the manufacturing process of the water jelly, the gel structure may be prevented from collapsing during a manufacturing process, and a water jelly having constant quality may be manufactured.

The method for manufacturing a water jelly of the present application may further include sterilizing the water jelly, filling it into a packaging material, and then cooling the package, after manufacturing the water jelly with the jelly preparation solution prepared by adding the second acidity regulator.

The sterilization is not limited, but may be performed using pasteurization which is heating to a temperature of 100°C or lower, and specifically, may be performed by a heat treatment at a temperature of 90 to 100°C for 30 seconds or more.

The water jelly may be manufactured by performing sterilization with hot water at 70 to 95°C for about 10 minutes to 30 minutes for securing microbial safety after filling it into the packaging material and then cooling the water jelly with cooling water at 10 to 20°C.

A method for supplying the hot water and the cooling water is not limited, but may be a shower method. When the hot water and the cooling water are supplied by a shower method, the jelly hardens in a state of being dispersed in a liquid and it may become easy to eat the jelly through a spout pouch.

Another aspect of the present application provides a water jelly manufactured by the method for manufacturing a water jelly described above.

In the water jelly of the present application, for the gelling agent, the saccharides, the first acidity regulator, the fermented vinegar, the second acidity regulator, the jelly preparation solution, and the like, the above descriptions may be equally applied.

The water jelly may have a hardness of 0.5 to 3 N, 0.5 to 2.5 N, 0.5 to 2 N, or 0.5 to 1.5 N.

The hardness shows hardness when chewing, and when the hardness of the water jelly is in the above range, soft texture with good chewing and swallowing may be implemented.

### ADVANTAGEOUS EFFECTS

According to the method for manufacturing a water jelly of the present application, the gel structure does not collapse during the manufacturing process to provide process convenience, the quality of the final water jelly may be maintained consistently even in the case of using a fermented vinegar having an inconsistent total acid content, and a water jelly product which has reduced vinegar odor and is easy to swallow may be provided.

However, the effect of the present invention is not limited to the effects mentioned above, and other effects which are not mentioned herein may be clearly understood by a person skilled in the art from the following description.

### MODE FOR CARRYING OUT THE INVENTION

Hereinafter, the present invention will be described in detail by the examples. However, the following examples only specifically illustrate the present invention, and the content of the present invention is not limited by the following examples.

### [Example 1]: Manufacture of water jelly using fermented vinegar

### 1-1. Preparation of fermented vinegar

The fermented vinegar of the present application is a vinegar having different qualities depending on fermentation raw materials and processes, and as shown in the following [Table 1] and [Table 2], a fermented pomegranate vinegar (CJ CHEILJEDANG CORP, Korea) and a fermented apple vinegar (CJ CHEILJEDANG CORP, Korea) which had inconsistent total acid contents were used in the experiment.

**[Table 1]**

| Date of manufacture of fermented pomegranate vinegar | pH | Total acid content (w/v%) |
|---|---|---|
| February 5, 2021 | 2.82 | 8.5, 8.58 |
| December 16, 2021 | 2.79 | 8.65 |
| February 25, 2021 | 2.58 | 8.45 |

**[Table 2]**

| Date of manufacture of fermented apple vinegar | pH | Total acid content (w/v%) |
|---|---|---|
| February 4, 2021 | 3.14 | 7.57 |
| December 16, 2021 | 3.13 | 7.5 |
| February 4, 2021 | 3.1 | 7.52 |
| February 25, 2021 | 3.01 | 7.68 |

### 1-2. Method for manufacturing water jelly

0.09 to 0.15 wt% of carrageenan (CP KELCO, Denmark) and 1 to 2 wt% of sugar (CJ CHEILJEDANG CORP, Korea) were weighed and mixed, 0.09 to 0.15 wt% of Konjac (Hubei yizhi, China) and 1 to 2 wt% of sugar were weighed and mixed, and 0.02 to 0.05 wt% of locust bean gum (TATE&LYLE ITALIA SPA, Italy) and 1 to 2 wt% of sugar were weighed and mixed. The above three mixtures of a gelling agent and sugar were added to purified water heated to about 80 to 85°C and stirred. 3 to 10 wt% of sugar was further added to the mixture of the gelling agent and the sugar, stirring was performed for 15 minutes or more, and it was confirmed whether the mixture was completely dissolved (hydrated). 3 to 10 wt% of erythritol (ZIBO ZHONGSHI GREEN BIOTECH CO, LTD., China) and 8 to 9 wt% of indigestible maltodextrin (Daesang Corporation, Korea) were further added, and then 0.02 to 0.025 wt% of a stevia extract (Shandong Haigen Biotechnology, China) dissolved in water was added. 2 to 3 wt% of a fruit concentrate (Gan shumel food, Israel) was added. Next, 0.10 to 0.15 wt% of trisodium citrate (Weifang, China) as a first acidity regulator was added. 0.25 to 0.35 wt% of fruity flavor (MSC, Korea) was added thereto, and then 4 to 5.5 wt% of fermented fruit vinegar was added to prepare a fermented vinegar mixed solution. At this time, the total acid content was measured before adding the fermented fruit vinegar, thereby calculating the amount of the subsequently added second acidity regulator (citric acid) depending on the total acid content of the fermented vinegar.

### Method for measuring total acid content (w/v%) = [0.1 N NaOH consumption (mL) × 0.064] / [collected amount of sample (mL)]

The sugar content and the total acid content of the fermented vinegar mixed solution prepared by the above method were measured and recorded. Subsequently, the amount of citric acid (RZBC, China) as the second acidity regulator to make the total acid content range 0.4 to 0.7 w/v% of the jelly preparation solution (finished water jelly product) was calculated considering the total acid content of the fermented vinegar measured above, and then citric acid as the second acidity regulator in the calculated amount was added to the fermented vinegar mixed solution and stirred to manufacture a water jelly.

The water jelly manufactured above was H.T.S.T. sterilized at 90 to 100°C for 30 seconds or more and then filled into a spout pouch. After the filling, the water jelly product was sterilized with hot water at 90 to 95°C and then cooled with cooling water at 10 to 20°C. At this time, the hot water and the cooling water were discharged using a showering method.

### [Comparative Example 1]: Manufacture of water jelly using fermented vinegar

The water jelly of Comparative Example 1 was manufactured in the same manner as in Example 1, except that the addition order of the fermented vinegar, the acidity regulator, and the flavor was changed as shown in the following [Table 3].

**[Table 3]**

| Classificati on | Example 1 | Comparative Example 1 |
|---|---|---|
| Manufactur ing process | Adding gelling agent and sugar in mixture | Adding gelling agent and sugar in mixture |
| | ① sugar + carrageenan | ① sugar + carrageenan |
| | ② sugar + Konjac | ② sugar + Konjac |
| | ③ sugar + locust bean gum | ③ sugar + locust bean gum |
| | Adding sweetener (erythritol, stevia) | Adding sweetener (erythritol, stevia) |
| | Dietary fiber (ingestible maltodextrin) | Dietary fiber (ingestible maltodextrin) |
| | Adding concentrate | Adding concentrate |
| | Adding first acidity regulator (sodium citrate) | Adding fermented vinegar |
| | Adding flavor | Adding acidity regulator (adding citric acid, sodium citrate) |
| | Adding fermented vinegar | |
| | Correcting (measuring sugar content and acidity) | Adding flavor |
| | Adding second acidity regulator (citric acid) | Correction (measuring sugar content and acidity) |
| | Sterilizing and filling | Sterilizing and filling |
| | Post-sterilizing and cooling | Post-sterilizing and cooling |

### [Comparative Examples 2-1 to 2-6]: Manufacture of water jelly using fermented vinegar

In order to develop a water jelly having constant quality without gelation disentanglement even in the case of using fermented vinegar, an experiment for determining the effect of the type of gelling agents on the physical properties of the water jelly was performed. Specifically, carrageenan, Konjac, and locust bean gum were used alone or variously in combination to manufacture water jellies.

**[Table 4]**

| Gelling agent type | Comparative Example 2-1 (carrageenan) | Comparative Example 2-2 (Konjac) | Comparative Example 2-3 (locust bean gum) | Comparative Example 2-4 (carrageenan + Konjac) | Comparative Example 2-5 (carrageenan + locust bean gum) | Comparative Example 2-6 (Konjac + locust bean gum) |
|---|---|---|---|---|---|---|
| Carageenan | 0.1 wt% | | | 0.1 wt% | 0.1 wt% | |
| Konjac | | 0.1 wt% | | 0.1 wt% | | 0.1 wt% |
| Locust bean gum | | | 0.025 wt% | | 0.025 wt% | 0.025 wt% |

### [Example 2]: Confirmation on whether gel was formed depending on amount of second acidity regulator added

In order to manufacture water jellies having the same quality using the fermented vinegar having inconsistent total acid contents, an experiment to confirm whether a gel was formed using different amounts of the acidity regulator added depending on the total acid content of the fermented vinegar was carried out.

Specifically, the broad total acid content range of the fermented vinegar was divided into sections, and the amount of the second acidity regulator (citric acid) added was calculated by section so that the total acid content of the finished jelly product (jelly preparation solution) manufactured when the fermented vinegar in the corresponding section was added to the gelled product to which the first acidity regulator had been added was 0.4 to 0.7 w/v% (Table 5). In order to confirm the effectiveness of the calculated amount of citric acid as the second acidity regulator added, the fermented vinegar in the total acid content range by section was added to blend the jelly preparation solution, and then it was confirmed whether gel formation lasted during a standby time.

A method for confirming continuation of gel formation was as follows. The jelly preparation solution was blended by the method for manufacturing a water jelly of Example 1, and was allowed to stand while heating the jelly preparation solution so that the temperature was maintained at 62 to 70°C. After 30 minutes, 60 minutes, 90 minutes, and 120 minutes of standing, the jelly preparation solution was taken and hardened into a water jelly through the processes of sterilization → filling → post-sterilization → cooling. Whether a gel was formed when confirming the physical properties of the water jelly by the amount of the citric acid added and by the stand time of the manufacturing solution is shown in the following Tables 6, 7, and 8, respectively. It was confirmed that gel formation was continued up to 120 minutes only in the case of the calculated amount of the second acidity regulator (citric acid) added in Table 5 in the total acid content range of each fermented vinegar.

### <Standard>

**[Table 5]**

| Total acid content of fermented vinegar (w/v%) | Citric acid addition (%) | Amount of citric acid added (wt%) |
|---|---|---|
| 7.0 or more and less than 7.5 | Mixing ratio 100% | 0.03 |
| 7.5 or more and less than 8.0 | Mixing ratio 100% | 0.03 |
| 8.0 or more and less than 8.5 | Mixing ratio 50% | 0.015 |
| 8.5 or more and less than 9.0 | Mixing ratio 10% | 0.003 |

### <Whether gel was formed when using fermented vinegar having a total acid content of 8.9 w/v%>

**[Table 6]**

| Classificati on | Amount of citric acid added (wt%) | Standby time before sterilization (min) | | | | |
|---|---|---|---|---|---|---|
| | | 0 | 30 | 60 | 90 | 120 |
| Existing 100% | 0.03 | ○ | ○ | ○ | × | × |
| Improved 70% | 0.21 | ○ | ○ | ○ | × | × |
| Improved 50% | 0.015 | ○ | ○ | ○ | × | × |
| Improved 30% | 0.009 | ○ | ○ | ○ | ○ | Δ |
| Improved 10% | 0.003 | ○ | ○ | ○ | ○ | ○ |

### <Whether gel was formed when using fermented vinegar having a total acid content of 8.4 w/v%>

**[Table 7]**

| Classificatio n | Amount of citric acid added (wt%) | Standby time before sterilization (min) | | | | |
|---|---|---|---|---|---|---|
| | | 0 | 30 | 60 | 90 | 120 |
| Existing 100% | 0.03 | ○ | ○ | ○ | × | × |
| Improved 70% | 0.21 | ○ | ○ | ○ | × | × |
| Improved 50% | 0.015 | ○ | ○ | ○ | ○ | ○ |
| Improved 30% | 0.009 | ○ | ○ | ○ | ○ | ○ |
| Improved 10% | 0.003 | ○ | ○ | ○ | ○ | ○ |

### <Whether gel was formed when using fermented vinegar having a total acid content of 7.9 w/v%>

**[Table 8]**

| Classificati on | Amount of citric acid added (wt%) | Standby time before sterilization (min) | | | | |
|---|---|---|---|---|---|---|
| | | 0 | 30 | 60 | 90 | 120 |
| Existing 100% | 0.03 | ○ | ○ | ○ | ○ | ○ |
| Improved 70% | 0.21 | ○ | ○ | ○ | ○ | ○ |
| Improved 50% | 0.015 | ○ | ○ | ○ | ○ | ○ |
| Improved 30% | 0.009 | ○ | ○ | ○ | ○ | ○ |
| Improved 10% | 0.003 | ○ | ○ | ○ | ○ | ○ |

### [Experimental Example 1]: Results of sensory evaluation of water jelly

The physical properties of the water jellies manufactured in Example 1 and Comparative Example 1 were evaluated for physical properties, vinegar odor, and preference by sensory evaluation by 5 panels, and the evaluation indicator was 5 points for very good, 3 points for normal, and 1 points for very bad.

Specifically, for the physical properties, feeling on tongue and a swallowing degree when tasting the water jelly immediately after production and after aging of the water jelly were expressed as a physical property score. According to the process of manufacturing a water jelly of the present application, since it took about 2 hours to produce 1 ton, constant quality should be maintained for 2 hours. Therefore, the water jelly products were divided into early products which were the water jelly products produced from immediately after production to 40 minutes after production, middle products which were the water jelly products produced from 41 minutes to 80 minutes after production, and late products which were the water jelly products produced from 81 minutes to 120 minutes after production, and then evaluated. For the vinegar odor, preference for the unique spicy flavor of vinegar when eating the water jelly immediately after production and after aging of the water jelly was measured. Overall preference was evaluated when eating the water jelly immediately after manufacture and after aging of the water jelly. The sensory evaluation results are shown in [Table 9].

**[Table 9]**

| Classification | Physical properties | | | Vinegar odor preference | Overall preference |
|---|---|---|---|---|---|
| | Early product (immediately after production to 40 minutes after production) | Middle product (41 minutes to 80 minutes) | Late product (81 minutes to 120 minutes) | | |
| Example 1 | 5.0 | 4.5 | 4.0 | 4.0 | 5.0 |
| Comparative Example 1 | 5.0 | 3.0 | 2.0 | 3.0 | 3.5 |

According to Table 9, the overall physical properties of the jelly tended to weaken as production time passed. However, though the physical properties of the early products, the middle products, and the late products were maintained relatively consistent in Example 1, the physical properties of the gel were rapidly weakened toward the late products in Comparative Example 1. In addition, it was confirmed that the vinegar preference and the overall preference of Example 1 were better. Thus, it was found that the water jelly manufactured in the order of the manufacturing process of Example 1 (adding flavor → adding vinegar → adding second acidity regulator) maintained constant gel quality, had improved unique flavor of vinegar, and had increased overall preference.

### [Experimental Example 2]: Confirmation of physical properties of water jelly depending on type and amount of gelling agent added

It was visually observed whether a gel was formed in the water jellies manufactured in Example 1 and Comparative Examples 2-1 to 2-6, and the physical properties were evaluated by sensory evaluation by 5 panels.

**[Table 10]**

| | Comparative Example 2-1 Carrageenan | Comparative Example 2-2 Konjac | Comparative Example 2-3 Locust bean gum | Comparative Example 2-4 carrageenan + Konjac | Comparative Example 2-5 carrageenan + locust bean gum | Comparative Example 2-6 Konjac + locust bean gum | Example 1 carrageena n+ Konjac+ locust bean gum |
|---|---|---|---|---|---|---|---|
| Gel forming ability | ○ | ○ | × | ○ | ○ | × | ○ |
| Physical properties of gel | Low elasticity | Low elasticity | - | Hard | Low elasticity | - | Appropriat e |
| Swallowing | Normal | Normal | - | Difficult | Normal | - | Easy |

As a result, as shown in [Table 10], it was evaluated that when the locust bean gum was used alone or the Konjac and the locust bean gum were used, a gel was not formed, and in the case of a jelly using the carrageenan and the Konjac alone, a gel was formed, but the gel had low elasticity. In addition, a jelly using carrageenan and Konjac formed a hard gel and was not easy to swallow it, and a jelly using carrageenan and locust bean gum formed a gel, but which was not elastic with juicy physical properties. However, a jelly manufactured using carrageenan, locust bean gum, and Konjac formed a gel easily, and the gel had chewy elasticity and was easy to swallow.

### [Experimental Example 3]: Confirmation of hardness of water jelly

### 3-1. Comparison of hardness with cup-shaped jelly

The water jelly manufactured in Example 1 and a commercially available cup-shaped jelly (Petitzel, peach flavor, 90 g, CJ CHEILJEDANG CORP) were prepared after filling them into a round cup having an upper diameter of 80 mm, a lower diameter of 80 mm, and a height of 40 mm and cooling. Only the jelly of the part without pulp was cut into a cube with width (10 mm), length (10 mm), height (10 mm) and used as a specimen, and the hardness was measured using Texture Analyzer (TA XT plus (Stable micro systems, UK)). Three specimens per one specimen item were prepared and measurement was performed under the conditions in the following [Table 11].

The physical property analyzer may perform analysis by mimicking a force required when a person first chewed it in the mouth. A probe (cylinder metal probe) of the physical property analyzer measured a force of the moment when the probe vertically came down to a food sample at an adjusted speed from an adjusted distance and the food was broken. A device of force perception and a transducer perceived a force applied to the measured sample and sent the data (force value, operation time, and probe travel distance) to a computer.

**[Table 11]**

| Item | Conditions |
|---|---|
| Probe | Circular, diameter: 20 mm |
| Pre-test speed | 5 mm / sec |
| Test speed | 2 mm / sec |
| Post-test speed | 2 mm / sec |
| Pressure | 30% compression (Strain 30%) |

**[Table 12]**

| Item | Hardness (N) |
|---|---|
| Cup-shaped jelly | 4.81 ± 0.28 |
| Water jelly of Example 1 | 1.29 ± 0.20 |

As confirmed from the TA results, it was found that the hardness of the water jelly was lower by about 3.7 times than the cup-shaped jelly and had the physical property to easily eat with a spout pouch.

### 3-2. Comparison of hardness with gummy jelly

The water jelly manufactured in Example 1 and a commercially available gummy jelly (Lotte Confectionery, Jellycious, green grape flavored) were cut into the same height (12 mm) and used as specimens, and their hardness were measured using Texture Analyzer(TA XT plus texture analyze (Stable micro systems)). Three specimens per one specimen item were prepared and measurement was performed under the conditions in the following [Table 13].

**[Table 13]**

| Item | Conditions |
|---|---|
| Probe | Circular, diameter: 5 mm |
| Pre-test speed | 5 mm / sec |
| Test speed | 5 mm / sec |
| Post-test speed | 5 mm / sec |
| Pressure | 85% compression (Strain 85%) |

**[Table 14]**

| Item | Hardness (N) |
|---|---|
| Gummy jelly | 18.14 ± 1.81 |
| Water jelly of Example 1 | 0.58 ± 0.05 |

It was found that the water jelly had a hardness much lower than that of the gummy jelly and had a physical property to easily eat with a spout pouch.

Hereinabove, though the preferred exemplary embodiments of the present invention has been illustratively described, the scope of the present invention is not limited to the certain manufacturing examples described above, and appropriate modification may be carried out within the scope of the claims of the present invention by a person with ordinary skill in the art.

## Claims

1. A method for manufacturing a water jelly, the method comprising:
mixing a gelling agent, a saccharide, and purified water to prepare a gelled product;
adding a first acidity regulator to the gelled product;
adding fermented vinegar to the gelled product to which the first acidity regulator has been added to prepare a fermented vinegar mixed solution; and
adding a second acidity regulator to the fermented vinegar mixed solution to prepare a jelly preparation solution.

2. The method for manufacturing a water jelly of claim 1, wherein the gelling agent is a mixture of carrageenan, Konjac, and locust bean gum.

3. The method for manufacturing a water jelly of claim 2, wherein the carrageenan, the Konjac, and the locust bean gum are mixed at a weight ratio of 0.09 to 0.15 : 0.09 to 0.15 : 0.02 to 0.05.

4. The method for manufacturing a water jelly of claim 1, wherein the saccharide is any one or more selected from the group consisting of sugar, glucose, fructose, starch syrup, maltodextrin, stevia, oligosaccharide, honey, trehalose, sorbitol, xylitol, mannitol, rhamnitol, inositol, erythritol, and quercitol.

5. The method for manufacturing a water jelly of claim 1, wherein the purified water is heated to a temperature of 60 to 90°C.

6. The method for manufacturing a water jelly of claim 1, wherein the first acidity regulator is any one or more selected from the group consisting of potassium citrate, calcium citrate, tripotassium citrate, trisodium citrate, disodium citrate, sodium lactate, potassium lactate, calcium lactate, magnesium lactate, zinc lactate, potassium tartrate, calcium tartrate, DL-sodium tartrate, sodium potassium tartrate, DL-sodium malate, L-sodium aspartate, L-magnesium aspartate, calcium ascorbate, L-sodium ascorbate, sodium succinate, disodium succinate, sodium phosphate, and potassium phosphate.

7. The method for manufacturing a water jelly of claim 1, wherein the first acidity regulator is added at 0.05 to 0.5 wt% with respect to the total weight of the water jelly.

8. The method for manufacturing a water jelly of claim 1, further comprising: adding any one or more selected from the group consisting of sweeteners and concentrates, before the adding of a first acidity regulator to the gelled product.

9. The method for manufacturing a water jelly of claim 1, further comprising: adding a flavoring, after the adding of a first acidity regulator to the gelled product.

10. The method for manufacturing a water jelly of claim 1, wherein in the adding of a second acidity regulator to the fermented vinegar mixed solution, an amount of the second acidity regulator added is adjusted so that a total acid content of the jelly preparation solution is 0.4 to 0.7 w/v%.

11. The method for manufacturing a water jelly of claim 10, wherein the amount of the second acidity regulator added is adjusted by:
first calculating the amount of the second acidity regulator added to make the total acid content of the jelly preparation solution 0.4 w/v% to 0.7 w/v% when using a reference fermented vinegar, and then,
when the fermented vinegar has an increased total acid content as compared with the total acid content of the reference fermented vinegar, adding the second acidity regulator in a decreased amount as compared with the amount of the second acidity regulator added which is calculated when using the reference fermented vinegar, or
when the fermented vinegar has a decreased total acid content as compared with the total acid content of the reference fermented vinegar, adding the second acidity regulator in an increased amount as compared with the amount of the second acidity regulator added which is calculated when using the reference fermented vinegar.

12. The method for manufacturing a water jelly of claim 11, wherein the amount of the second acidity regulator added is adjusted by:
when the fermented vinegar has a total acid content increased by 14.3% to 21.4% based on the total acid content of the reference fermented vinegar, adding the second acidity regulator in an amount decreased by 45% to 55% as compared with the amount of the second acidity regulator added which is calculated as an amount added in the case of the total acid content of the reference fermented vinegar, or
when the fermented vinegar has a total acid content increased by 22% to 28.5% based on the total acid content of the reference fermented vinegar, adding the second acidity regulator in an amount decreased by 5% to 15% as compared with the amount of the second acidity regulator added which is calculated as an amount added in the case of the total acid content of the reference fermented vinegar.

13. The method for manufacturing a water jelly of claim 1, wherein the second acidity regulator is any one or more selected from the group consisting of citric acid, malic acid, tartaric acid, lactic acid, succinic acid, lemon juice, and vitamin C.

14. A water jelly manufactured by the method for manufacturing a water jelly of any one of claims 1 to 13.

15. The water jelly of claim 14, wherein the water jelly has a hardness of 0.5 N to 3 N.
